# EUROPÄISCHE PATENTSCHRIFT

(11) **EP 4 309 270 B1**
(45) Veröffentlichungstag und Bekanntmachung des Hinweises auf die Patenterteilung: **15.07.2026**
(21) Anmeldenummer: 22724779.8
(22) Anmeldetag: 25.04.2022
(51) Int. Cl.: H02K 5/22, H02K 5/10, H02K 5/08

(54) **STATOR FÜR EINEN ELEKTRISCHEN KÄLTEMITTELANTRIEB**
STATOR FOR AN ELECTRICAL REFRIGERANT DRIVE
STATOR POUR ENTRAÎNEMENT ÉLECTRIQUE À FLUIDE FRIGORIGÈNE

(30) Priorität: 26.04.2021 DE 102021204133
(43) Veröffentlichungstag der Anmeldung: 24.01.2024
(73) Patentinhaber: Brose Fahrzeugteile SE & Co. Kommanditgesellschaft, Würzburg, 97076 Würzburg (DE)
(72) Erfinder: SAWARKAR, Kartik, Wakad 411057 (IN); PORTNER, Stefan, 97236 Randersacker (DE); WÜST, Stefan, 97816 Lohr am Main (DE); VOLKAMER, Alexander, 91483 Oberscheinfeld (DE)
(74) Vertreter: FDST Patentanwälte
(86) Internationale Anmeldenummer: PCT/EP2022/060855
(87) Internationale Veröffentlichungsnummer: WO 2022/229074

(56) Entgegenhaltungen:
- EP-A1- 2 178 193
- WO-A1-2017/073649
- WO-A1-2017/107538
- CN-A- 112 436 661
- CN-U- 216 216 106
- DE-A1- 102016 223 576
- DE-A1- 102019 207 942
- JP-A- 2010 075 010
- JP-A- 2013 222 586
- JP-A- H07 222 388
- JP-A- S61 218 338
- JP-B2- 4 682 999
- JP-B2- 5 099 715
- JP-B2- 6 286 617
- US-A1- 2002 155 741
- US-A1- 2009 278 640

## Beschreibung

Die Erfindung betrifft einen Stator für einen elektrischen Kältemittelantrieb, mit einem Statorpaket, welches mit einer Statorwicklung bewickelt ist, und mit einem auf das Statorpaket aufgesetzten Kontaktadapter zur Verschaltung der Statorwicklung mit mindestens einem Phasenanschluss. Die Erfindung betrifft weiterhin einen elektrischen Kältemittelantrieb mit einem solchen Stator.

Bei Kraftfahrzeugen sind regelmäßig Klimaanlagen eingebaut, die mit Hilfe einer einen Kältemittelkreislauf bildenden Anlage den Fahrzeuginnenraum klimatisieren. Derartige Anlagen weisen grundsätzlich einen Kreislauf auf, in dem ein Kältemittel geführt ist. Das Kältemittel, beispielsweise R-134a (1,1,1,2-Tetrafluorethan) oder R-744 (Kohlenstoffdioxid), wird an einem Verdampfer erwärmt und mittels eines (Kältemittel-)Verdichters beziehungsweise Kompressors (Klimakompressor) verdichtet, wobei das Kältemittel anschließend über einen Wärmetauscher die aufgenommene Wärme wieder abgibt, bevor es über eine Drossel erneut zum Verdampfer geführt wird.

In derartigen Anwendungen sind beispielsweise Scroll-Maschinen als Kompressoren beziehungsweise Verdichter für das Kältemittel grundsätzlich möglich. Derartige Scrollverdichter weisen typischerweise zwei relativ zueinander bewegbare Scroll-Teile auf, die im Betrieb nach Art einer Verdrängerpumpe arbeiten. Die beiden Scroll-Teile sind hierbei typischerweise als ein ineinander verschachteltes (schneckenförmiges) Spiralen- oder Scrollpaar ausgeführt. Mit anderen Worten greift eine der Spiralen zumindest teilweise in die andere Spirale ein. Die erste (Scroll-)Spirale ist hierbei in Bezug auf ein Verdichtergehäuse feststehend (stationärer Scroll, Statorscroll, engl.: fixed scroll), wobei die zweite (Scroll-)Spirale (beweglicher Scroll, Rotorscroll, engl.: movable/orbiting scroll) mittels eines Elektromotors innerhalb der ersten Spirale orbitierend angetrieben ist.

Zum elektrischen oder elektromotorischen Antrieb eines die Scroll-Maschine aufweisenden Verdichterkopfs ist in der Regel ein bürstenloser Elektromotor vorgesehen. Ein insbesondere bürstenloser Elektromotor als elektrische (Drehstrom-) Maschine weist üblicherweise einen mit einer mehrphasigen Feld- oder Statorwicklung versehenen Stator auf, welcher koaxial zu einem Rotor mit einem oder mehreren Permanentmagneten angeordnet ist. Sowohl der Rotor als auch der Stator sind beispielsweise als Blechpakete aufgebaut, wobei Statorzähne in dazwischenliegenden Statornuten die Spulen der Statorwicklung tragen.

Bei einem bürstenlosen Elektromotor wird der zur Speisung der Statorwicklung vorgesehene Wechselstrom üblicherweise von einem Umrichter (Wechselrichter, Inverter) einer Motorelektronik oder eines Motorsteuergeräts erzeugt. Hierzu ist die Statorwicklung über Phasenanschlüsse zu dem Umrichter geführt beziehungsweise an diesen angeschlossen. Zum Schutz vor Umwelteinflüssen (Verschmutzungen, Feuchtigkeit) ist die Motorelektronik in der Regel in einem Elektronikgehäuse aufgenommen. Das Elektronikgehäuse ist hierbei zweckdienlicherweise in der Nähe eines den Elektromotor aufnehmenden Motorgehäuses angeordnet.

Für einen schnellen und zuverlässigen Anlauf und Betrieb des Verdichters ist eine vergleichsweise hohe Leistung des Elektromotors notwendig. Mit anderen Worten sind vergleichsweise große (Dreh-)Ströme zum Antrieb des Rotors notwendig, damit der Verdichter in kurzer Zeit auf eine Betriebsgeschwindigkeit beschleunigt werden kann. Bei einem Beaufschlagen der Statorwicklung mit einem großen Strom entsteht eine signifikante Wärmeentwicklung. Zur Kühlung wird der Elektromotor beziehungsweise Stator im Betrieb von dem Kältemittel und/oder einem Motorfluid (Motoröl) umspült.

Dies bedingt eine fluiddichte und druckdichte Trennung zwischen dem Motorgehäuse und dem Elektronikgehäuse, sodass die Leistungselektronik der Motorelektronik nicht beschädigt oder zerstört wird. Zu diesem Zwecke sind die Phasenanschlüsse beispielsweise mittels einer Durchkontaktierung gegenüber den Gehäusen abgedichtet. Eine solche Durchkontaktierung ist beispielsweise in der DE 10 2016 223 576 A1 beschrieben.

Bei Hochspannungsanwendungen ist es weiterhin notwendig, dass alle offenen Leiter im Motorbereich isoliert werden. Die Statorwicklung ist beispielsweise in Form von mehreren Einzelspulen auf das Statorpaket aufgebracht, welche mit einer die Phasenanschlüsse aufweisenden Kontakt- oder Anschlusseinheit verschweißt sind. Dadurch ist eine vergleichsweise aufwendige Kontaktierung der Statorwicklung realisiert, wobei die Schweißbereiche in der Regel ungleichmäßig ausgeführt sind, wodurch die Isolierung im Motorbereich erschwert wird.

In der JP S61 218338 A, der JP 2013 222586 A, und der WO 2017/107538 A1 sind Statoren bekannt, bei welchen ein Spulenende der Statorwicklung in einer Vergusstasche mit einem elektrischen Anschluss kontaktiert und vergossen wird.

Der Erfindung liegt die Aufgabe zugrunde, einen besonders geeigneten Stator für einen elektrischen Kältemittelantrieb anzugeben. Insbesondere soll eine einfache und zuverlässige elektrische Isolierung der elektrischen Leiter realisiert werden. Der Erfindung liegt weiterhin die Aufgabe zugrunde, einen besonders geeigneten elektrischen Kältemittelantrieb anzugeben.

Hinsichtlich des Stators wird die Aufgabe mit den Merkmalen des Anspruchs 1 und hinsichtlich des Kältemittelantriebs mit den Merkmalen des Anspruchs 9 erfindungsgemäß gelöst. Vorteilhafte Ausgestaltungen und Weiterbildungen sind Gegenstand der Unteransprüche. Die im Hinblick auf den Stator angeführten Vorteile und Ausgestaltungen sind sinngemäß auch auf den Kältemittelantrieb übertragbar und umgekehrt.

Der erfindungsgemäße Stator ist für einen elektrischen Kältemittelantrieb vorgesehen, sowie dafür geeignet und eingerichtet. Dies bedeutet, dass der Stator dazu vorgesehen und eingerichtet ist im Betrieb von einem Kältemittel und/oder einem Motorfluid (Motoröl) umspült zu werden. Der Kältemittelantrieb ist hierbei vorzugsweise ein Klimakompressor eines Kraftfahrzeugs.

Der Stator weist ein Statorpaket als Statorkörper auf, auf welchen eine Statorwicklung aufgebracht ist. Das Statorpaket ist beispielsweise als ein Blechpaket mit einem umlaufenden Statorjoch und mit einer Anzahl von radial orientierten Statorzähnen ausgeführt. Die Statorwicklung ist als eine mehrphasige Drehfeldwicklung ausgeführt, welche um die Statorzähne gewickelt ist. Bevorzugterweise ist die Statorwicklung als eine durchgängige oder kontinuierliche (Draht-)Wicklung ausgeführt. Insbesondere ist die Statorwicklung als eine kontinuierliche Nadelwicklung auf das Statorpaket aufgebracht.

Der Stator weist weiterhin einen stirnseitig auf das Statorpaket aufgesetzten Kontaktadapter (Verschaltungsdeckel) zur Verschaltung der Statorwicklung mit mindestens einem Phasenanschluss auf. Bei einer mehrphasigen Statorwicklung ist vorzugsweise je ein Phasenanschluss pro (Stator-)Phase vorgesehen. Mit anderen Worten weist der Stator eine der Anzahl der Phasen entsprechende Anzahl von Phasenanschlüssen auf. Vorzugsweise weist eine als kontinuierliche Nadelwicklung ausgeführte Statorwicklung hierbei drei Phasenanschlüsse auf, so dass ein besonders geringer Verschaltungsaufwand gewährleistet ist.

Die elektrischen Isolierung der Verschaltungspunkte oder Kontaktstellen zwischen der Statorwicklung und den Phasenanschlüssen erfolgt erfindungsgemäß mittels eines Vergusses.

Hierzu weist der beispielsweise als Spritzgussteil ausgeführte Kontaktadapter mindestens eine Vergusstasche auf, in welche der Phasenanschluss eingesetzt ist. Unter einer Vergusstasche ist hierbei insbesondere eine beispielsweise topfförmige, buchsenförmige oder becherförmige Aufnahme für ein Vergussmaterial oder eine Vergussmasse zu verstehen. Insbesondere weist der Kontaktadapter eine der Anzahl der Phasenanschlüsse entsprechende Anzahl von Vergusstaschen auf, in welche jeweils ein zugeordneter Phasenanschluss eingesetzt ist. Mindestens ein Wicklungsabschnitt der Statorwicklung ist hierbei in die Vergusstasche geführt und mit dem Phasenanschluss elektrisch kontaktiert, beispielsweise sind zwei übereinander gestapelt angeordnete Wicklungsabschnitte mit dem Phasenanschluss kontaktiert. Zum Zwecke eines Eindringschutzes ist die Vergusstasche mit einem ausgehärteten Vergussmaterial oder einer Vergussmasse, beispielsweise einem Epoxidharz, gefüllt. Dadurch ist ein besonders geeigneter Stator realisiert.

Erfindungsgemäß ist somit vorgesehen, dass der Stator beziehungsweise dessen Kontaktadapter eine Kontur oder Aufnahme für einen Verguss aufweist, in welchem der Verschaltungspunkt oder die Kontaktstelle zwischen der Statorwicklung und dem Phasenanschluss eingebettet ist. Dadurch ist eine zuverlässige und einfache sowie kostengünstige elektrische Isolierung gegenüber dem Kältemittel und/oder Motorfluid realisiert.

Das Vergussmaterial wird hierbei zweckmäßigerweise nach einer Kontaktierung oder Verschaltung des Wicklungsabschnitts und des Phasenanschlusses in die Vergusstasche eingefüllt. Dadurch werden der Wicklungsabschnitt und der Phasenanschluss von der ausgehärteten Vergussmasse umschlossen, und somit elektrisch isoliert. Weiterhin realisiert die ausgehärtete Vergussmasse eine mechanische Stabilisierung, wodurch die Zugentlastung des Phasenanschlusses verbessert wird. Als Vergussmaterial wird beispielsweise ein Werkstoff mit guten Adhäsionseigenschaften und einer hohen chemischen Beständigkeit gegenüber Kältemittel und/oder einem Motorfluid, wie beispielsweise Epoxidharz, verwendet.

In einer vorteilhaften Ausführung ist die Vergusstasche durch einen emporstehenden, umlaufend geschlossenen, Rand gebildet, welcher einstückig, also einteilig oder monolithisch, an den Kontaktadapter angeformt ist. Dadurch ist eine einfache und zweckmäßige Vergusstasche gebildet.

In einer geeigneten Weiterbildung weist die Vergusstasche eine angeformte Führungskontur zur Führung des Wicklungsabschnitts auf. Dadurch werden die Montage und Kontaktierung des Stators vereinfacht. Vorzugsweise weist die Vergusstasche hierbei eine Drahtführungsnut und/oder eine Drahtführungsrampe als Führungskontur auf. Die Drahtführungsnut ist beispielsweise an dem Rand der Vergusstasche angeformt, wobei die Drahtführungsrampe beispielsweise als Führung vom Rand zur Kontaktstelle ausgebildet ist. Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

In einer denkbaren Ausgestaltung weist die Vergusstasche angeformte Positionierelemente zur Positionierung und/oder Halterung des Phasenanschlusses auf. Dadurch wird die Montage des Stators weiter vereinfacht. Die Positionierungselemente sind hierbei beispielsweise als in die Öffnung der Vergusstasche hineinragende Stege oder Fortsätze ausgebildet.

Erfindungsgemäß weist der Phasenanschluss einen Phasenpin als Anschlussbolzen (Phasenverlängerung, Phasenanschlusskontakt), und eine damit kontaktierte Leiterbahn zur Kontaktierung des Wicklungsabschnitts, sowie einen Phasendom als ein Gehäuse auf. Dadurch ist der Phasenanschluss als eine vorgefertigte Baueinheit ausgeführt, welche im Wesentlichen unabhängig von Wicklungsabschnitt in der Vergusstasche montierbar ist. Mit anderen Worten wird der Phasenanschluss vormontiert und bereitgestellt. Anschließend wird der Phasenanschluss in der Vergusstasche montiert. Durch den dadurch realisierbaren Vorfertigungsgrad wird die Herstellung des Stators vereinfacht, und somit Kosten reduziert.

Der Phasenpin bildet hierbei die statorseitige Schnittstelle zu einer Motorelektronik beziehungsweise zu einem Umrichter. Die Leiterbahn ist beispielsweise als ein Stanzgitter ausgeführt, welches mit dem Phasenpin elektrisch kontaktiert ist.

Beispielsweise sind der Phasenpin und die Leiterbahn miteinander stoffschlüssig verbunden, insbesondere verschweißt. Unter einem "Stoffschluss" oder einer "stoffschlüssigen Verbindung" zwischen wenigstens zwei miteinander verbundenen Teilen wird hier und im Folgenden insbesondere verstanden, dass die miteinander verbundenen Teile an Ihren Kontaktflächen durch stoffliche Vereinigung oder Vernetzung (beispielsweise aufgrund von atomaren oder molekularen Bindungskräften) gegebenenfalls unter Wirkung eines Zusatzstoffs zusammengehalten werden.

Vorzugsweise ist der Phasendom hierbei im Montagezustand vollständig in dem Vergussmaterial eingebettet, wobei lediglich der Phasenpin dem Vergussmaterial übersteht.

Zur fluiddichten und druckdichten Abdichtung des Phasenpins gegenüber einem Gehäuse oder einer Gehäusewand weist der Phasenanschluss vorzugsweise eine Durchkontaktierung auf. Die Durchkontaktierung weist hierbei beispielsweise einen mehrteiligen Aufbau mit einer ersten Hülse und mit einem Dichtungselement sowie mit einer zweiten Hülse auf. Die erste Hülse ist auf den Phasenpin aufgesetzt und vorzugsweise stoffschlüssig, insbesondere mittels Ultraschallschweißen, mit dem Phasendom gefügt. Auf die erste Hülse ist das Dichtelement, beispielsweise in Form eines Dichtrings oder O-Rings, aufgesetzt, wobei die zweite Hülse auf das Dichtelement und die erste Hülse aufgesetzt ist. Die Hülsen bilden hierbei eine Isolierhülse welche den Phasenanschluss zumindest abschnittsweise einfasst oder umschließt, wobei das Dichtelement als ein radial überstehender Dichtkragen ausgebildet ist. Die Hülsen sind hierbei beispielsweise aus einem Polyamid-Kunststoff (PA) hergestellt.

In einer zweckmäßigen Ausgestaltung weist die Leiterbahn einen U-förmigen Kontaktbereich zur Kontaktierung mit dem Wicklungsabschnitt auf. Der Wicklungsabschnitt sitzt hierbei zwischen den U-Schenkeln ein, wobei der Wicklungsabschnitt zur Kontaktierung insbesondere mit den zwei vertikalen U-Schenkel kontaktiert wird. Dadurch ist eine einfache und zuverlässige Kontaktierung des Wicklungsabschnitts realisiert.

Der U-förmige Kontaktbereich kann hierbei nach oben oder unten geöffnet orientiert sein. "Nach unten geöffnet" bedeutet hierbei insbesondere, dass die Öffnung zwischen den U-Schenkeln in Richtung eines Bodens der Vergusstasche orientiert sind. Entsprechend bedeutet "nach oben geöffnet" insbesondere, dass die Öffnung zwischen den U-Schenkeln zu einer (Einfüll-)Öffnung der Vergusstasche, also weg vom Boden, orientiert ist.

Ob der Kontaktbereich nach oben oder unten geöffnet ausgeführt ist, hängt hierbei im Wesentlichen von dem Montagekonzept oder Montagereihenfolge des Stators ab. Bei einem nach oben geöffneten Kontaktbereich wird vorzugsweise zunächst der Phasenanschluss in der Vergusstasche montiert, und anschließend der Wicklungsabschnitt in den Kontaktbereich gepresst oder geführt. Bei einem nach unten geöffneten Kontaktbereich wird im Gegensatz hierzu zunächst der Wicklungsabschnitt in der Vergusstasche positioniert, und anschließend der Phasenanschluss beziehungsweise der Kontaktbereich eingesetzt oder eingepresst.

In einer vorteilhaften Weiterbildung ist der Phasendom als eine Umspritzung des Phasenpins und der Leiterbahn ausgeführt. Vorzugsweise weist der Phasendom hierbei angeformte Gegenkonturen für die Positionierelemente der Vergusstasche auf. Die Gegenkonturen und Positionierelemente greifen hierbei im Montagezustand vorzugsweise formschlüssig ineinander ein. Dadurch ist eine zuverlässige Halterung und Positionierung des Phasenanschlusses in der Vergusstasche gewährleistet.

Unter einem "Formschluss" oder einer "formschlüssigen Verbindung" zwischen wenigstens zwei miteinander verbundenen Teilen wird hier und im Folgenden insbesondere verstanden, dass der Zusammenhalt der miteinander verbundenen Teile zumindest in einer Richtung durch ein unmittelbares Ineinandergreifen von Konturen der Teile selbst oder durch ein mittelbares Ineinandergreifen über ein zusätzliches Verbindungsteil erfolgt. Das "Sperren" einer gegenseitigen Bewegung in dieser Richtung erfolgt also formbedingt.

Der erfindungsgemäße elektrische Kältemittelantrieb ist für ein Kraftfahrzeug vorgesehen, sowie dafür geeignet und eingerichtet. Der Kältemittelantrieb ist hierbei beispielsweise als ein Klimakompressor einer Fahrzeug-Klimaanlage ausgebildet. Der Kältemittelantrieb weist hierbei beispielsweise einen elektromotorisch angetriebenen Scroll-Verdichter auf, wobei der insbesondere bürstenlose Elektromotor einen vorstehend beschriebenen Stator aufweist.

Nachfolgend sind Ausführungsbeispiele der Erfindung anhand einer Zeichnung näher erläutert. Darin zeigen:
- Fig. 1: in einer perspektivischen Darstellung einen elektrischen Kältemittelantrieb,
- Fig. 2: in einer perspektivischen Darstellung einen Stator des Kältemittelantriebs mit drei Phasenanschlüssen,
- Fig. 3 bis Fig. 7: in perspektivischen Darstellungen den Aufbau eines Phasenkontakts,
- Fig. 8: in einer perspektivischen Darstellung einen Kontaktadapter des Stators,
- Fig. 9: in einer perspektivischen Darstellung eine Vergusstasche des Kontaktadapters,
- Fig. 10: in Draufsicht die Vergusstasche mit einem Phasenanschluss,
- Fig. 11, Fig. 12: in perspektivischen Darstellungen eine Verschaltung eines Wicklungsabschnitts mit dem Phasenanschluss, und
- Fig. 13: in perspektivischer Darstellung den Phasenanschluss in einer zweiten Ausführungsform.

Einander entsprechende Teile und Größen sind in allen Figuren stets mit den gleichen Bezugszeichen versehen.

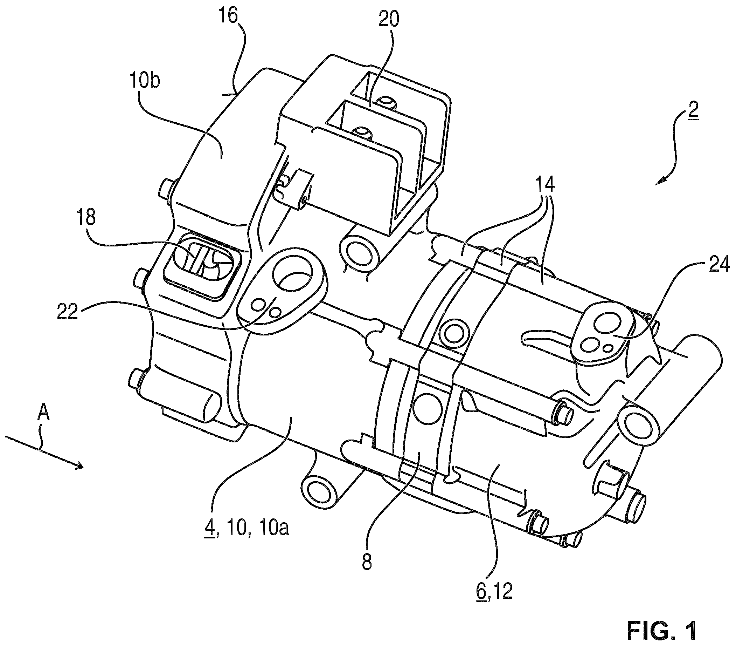

Die Fig. 1 zeigt einen erfindungsgemäßen Kältemittelantrieb 2, welcher beispielsweise in einem nicht näher dargestellten Kältemittelkreislauf einer Klimaanlage eines Kraftfahrzeugs verbaut ist. Der elektromotorische Kältemittelverdichter 2 weist einen elektrischen (elektromotorischen) Antrieb 4 und ein mit diesem gekoppelten Scrollverdichter 6 als Verdichterkopf auf. Zwischen dem Antrieb 4 und dem Scrollverdichter 6 ist ein Lagerschild (Center Plate) 8 als mechanische Schnittstelle vorgesehen, mittels welchem der Scrollverdichter 6 antriebstechnisch an den Antrieb 4 angebunden ist.

Das Lagerschild 8 bildet eine Zwischenwand zwischen einem Antriebsgehäuse 10 und einem Verdichtergehäuse 12. Der Scrollverdichter 6 ist mittels umfangsseitig verteilten, sich in eine Axialrichtung A des Kältemittelantriebs 2 erstreckenden Flanschverbindungen 14 mit dem Antrieb 4 verbunden (gefügt, geschraubt), welche in den Figuren lediglich beispielhaft mit Bezugszeichen versehen sind.

Ein verdichterseitiger Gehäuseteilbereich des Antriebsgehäuses 10 ist als ein Motorgehäuse 10a zur Aufnahme eines nicht näher gezeigten Elektromotors ausgebildet und einerseits durch eine nicht gezeigte, integrierte Gehäusezwischenwand zu einem mit einem Gehäusedeckel 16 versehenen Elektronikgehäuse 10b mit einer den Elektromotor ansteuernden Motorelektronik (Elektronik) 18, und andererseits durch die Center Plate 8 verschlossen. Das Antriebsgehäuse 10 weist im Bereich des Elektronikgehäuses 10b einen Anschlussabschnitt 20 zur elektrischen Kontaktierung der Elektronik 18 an ein Bordnetz des Kraftfahrzeugs auf.

Der Kältemittelantrieb 2 weist einen (Kältemittel-)Einlass oder (Kältemittel- )Zulauf 22 und einen (Kältemittel-)Auslass 24 zum Anschluss an den Kältemittelkreislauf auf. Der Einlass 22 ist in einem dem Elektronikgehäuse 10b zugewandten Bereich des Motorgehäuses angeformt. Der Auslass 24 ist an einem Boden des Verdichtergehäuses 12 angeformt. Im angeschlossenen Zustand bildet der Einlass 22 die Niederdruck- oder Saugseite (Sauggasseite) und der Auslass 24 die Hochdruck- oder Pumpseite (Pumpenseite) des Kältemittelantriebs 2.

Das Kältemittel ist somit zwischen dem Einlass 22 und dem Auslass 24 durch das Motorgehäuse 10a geführt, so dass der Elektromotor zur Kühlung mit dem Kältemittel umspült ist.

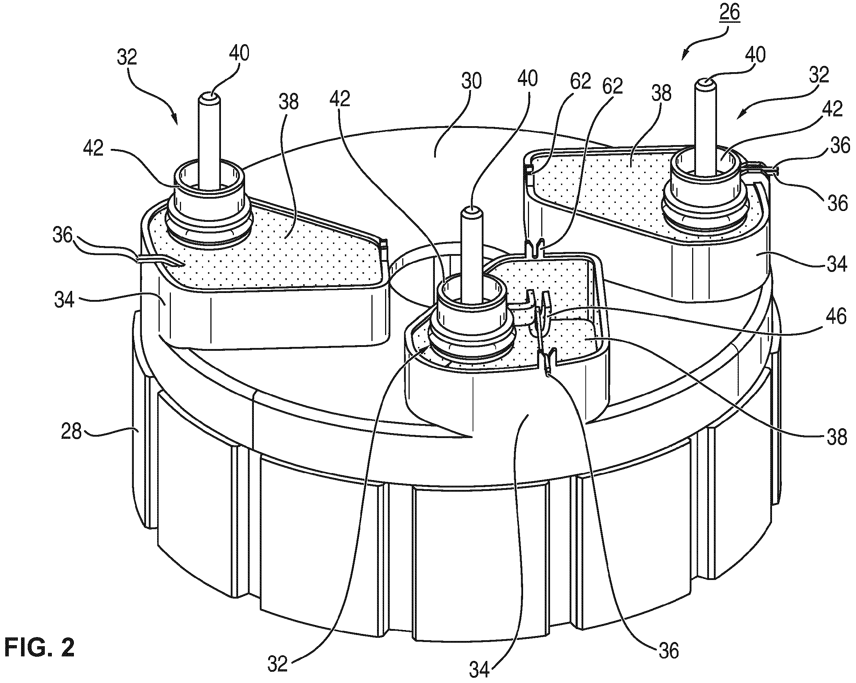

Die Fig. 2 zeigt einen Stator 26 des Elektromotors. Der Stator 26 weist ein beispielsweise als Blechpaket ausgeführtes Statorpaket 28 als Statorkörper auf. Das Statorpaket 28 weist hierbei ein umlaufendes Statorjoch mit radial nach innen ragenden Statorzähnen auf, auf welche eine nicht näher dargestellte Statorwicklung aufgebracht ist. Die Statorwicklung ist hierbei als eine durchgängige oder kontinuierliche Nadelwicklung auf das Statorpaket 28 aufgebracht.

Der Stator 26 weist weiterhin einen stirnseitig auf das Statorpaket 28 aufgesetzten Kontaktadapter 30 zur Verschaltung der insbesondere dreiphasigen Statorwicklung mit drei axial emporstehenden Phasenanschlüssen 32 auf. Der etwa ringförmige Kontaktadapter 30 ist vorzugsweise ein Spritzgussteil, und weist eine nicht näher bezeichnete zentrale Öffnung für eine Motorwelle auf. Um die Öffnung sind drei einstückig angeformte Vergusstaschen 34 verteilt angeordnet, in welchen jeweils einer der Phasenanschlüsse 32 aufgenommen ist.

Zur Kontaktierung und Verschaltung der Statorwicklung sind Wicklungsabschnitte 36 der Statorwicklung in die Vergusstaschen 34 geführt, und dort mit den Phasenanschlüssen 32 elektrisch kontaktiert. Hierzu sind beispielsweise jeweils zwei übereinander gestapelt angeordnete Wicklungsabschnitte 36 in eine jeweilige Vergusstasche 34 geführt. Die elektrischen Isolierung der Verschaltungspunkte oder Kontaktstellen zwischen den Wicklungsabschnitten 36 und den Phasenanschlüssen 32 erfolgt mittels eines in die Vergusstaschen 34 eingefüllten Vergusses. Mit anderen Worten ist die Vergusstasche 34 zum Zwecke eines Eindringschutzes mit einem ausgehärteten Vergussmaterial 38 gefüllt. In der Fig. 2 ist ein Vergussmaterial 38 teiltransparent dargestellt.

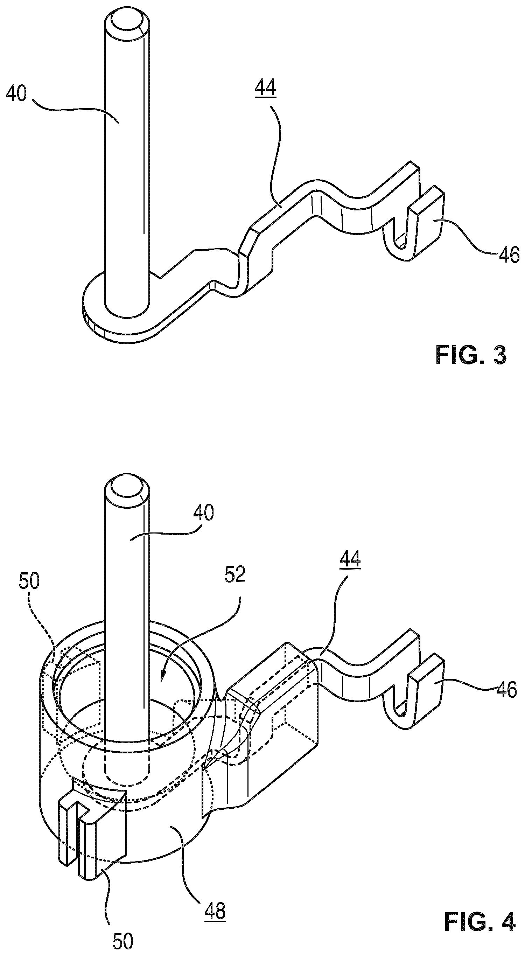

Nachfolgend ist anhand der Fig. 3 bis Fig. 7 zunächst der Aufbau der Phasenanschlüsse 32 näher erläutert. Der Phasenanschluss 32 ist als eine vorgefertigte Baueinheit ausgeführt, welche im Wesentlichen unabhängig von Wicklungsabschnitt 36 in der Vergusstasche 34 montierbar ist.

Der Phasenanschluss 32 weist hierbei einen axial orientierten Phasenpin 40 als Phasenanschlusskontakt auf. Der Phasenpin 40 ragt im Montagezustand freiendseitig in das Elektronikgehäuse 10b, und ist mittels einer Durchkontaktierung 42 druck- und fluiddicht durch die Gehäusezwischenwand zwischen dem Motorgehäuse 10a und dem Elektronikgehäuse 10b geführt. Die Durchkontaktierung 42 und der Phasenpin 40 stehen hierbei einer Oberfläche des Vergussmaterials 38 zumindest abschnittsweise axial empor.

Der Phasenpin 40 ist an einem Festende stoffschlüssig mit einer Leiterbahn 44 elektrisch leitend verbunden. Beispielsweise ist der bolzen- oder zylinderförmige Phasenpin 40 mit der als Stanzgitter oder Flachleiter ausgebildeten Leiterbahn 44 verschweißt (Fig. 3).

Die Leiterbahn 44 ist hierbei insbesondere als ein Stanzbiegeteil ausgebildet. Die Leiterbahn 44 weist an einem dem Phasenpin 40 gegenüberliegenden Leiterbahnende einen Kontaktbereich 46 zur Kontaktierung der Wicklungsabschnitte 36 auf. Wie in den Figuren 3 bis 7 vergleichsweise deutlich ersichtlich ist, weist der Kontaktbereich 46 im Wesentlichen die Form des Großbuchstabens "U" auf. Die vertikalen U-Schenkel sind hierbei entlang der Axialrichtung A orientiert, wobei der Kontaktbereich 46 beziehungsweise die U-Form nach oben, also in Richtung des Elektronikgehäuses 10b geöffnet ist.

Der Phasenpin 40 und die Leiterbahn 44 sind zumindest teilweise in einer Umspritzung eingebettet. Die Umspritzung ist hierbei als ein gehäuseartiger Phasendom 48 ausgeführt, mittels welchem der Phasenanschluss 32 in der Vergusstasche 34 montiert wird. In der Fig. 4 ist der Phasendom 48 teiltransparent dargestellt. Die Leiterbahn 44 weist zwischen dem Kontaktbereich 46 und der Schweißstelle mit dem Phasenpin 40 eine Biegung als axialen Versatz auf, so dass ein Boden des Phasendoms 48 und eine untere Kante des Kontaktbereichs 46 im Wesentlichen in einer Ebene angeordnet sind. Dadurch ist der Phasenanschluss 32 eben in die Vergusstasche 34 einsetzbar.

Der Phasendom 48 weist an seinem Außenumfang zwei nutenartige Gegenkonturen 50 auf. Der Phasendom 48 weist in Richtung des Phasenpins 40 eine etwa hohlzylindrische oder rohrförmige Ausgestaltung mit einer den Phasenpin 40 umgebenden Aufnahme 52 auf. Die Durchkontaktierung 42 ist hierbei zumindest teilweise in der Aufnahme 52 angeordnet.

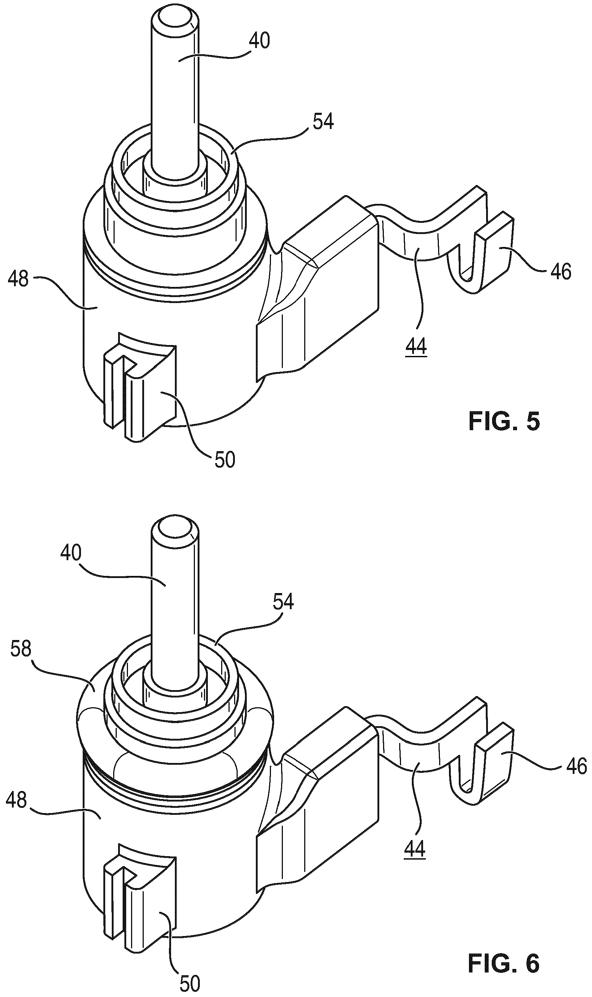

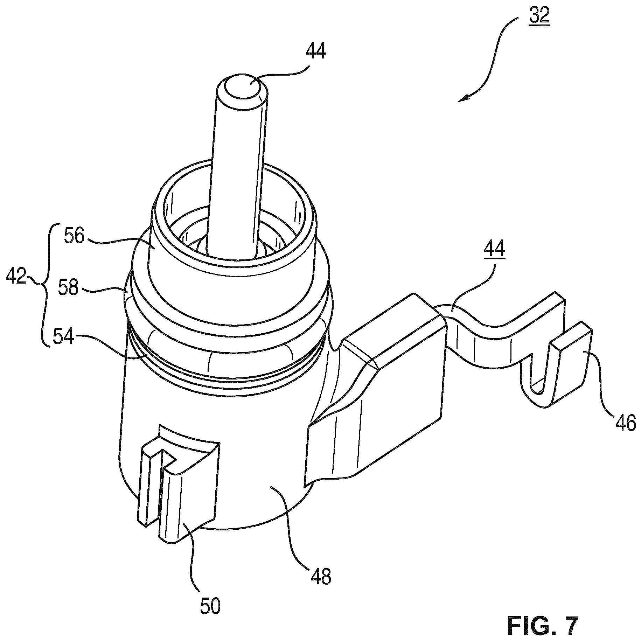

Nachfolgend ist anhand der Figuren 5 bis 7 der Aufbau der Durchkontaktierung 42 näher erläutert. Die Durchkontaktierung 42 weist hierbei zwei zusammengesetzte Hülsen 54, 56 sowie ein als O-Ring ausgeführtes Dichtelement 58 auf. Zur Montage der Durchkontaktierung 42 wird zunächst die Hülse 54 auf den Phasenpin 40 aufgesetzt und in die Aufnahme 52 gesteckt. Die Hülse 54 wird zur Abdichtung gegenüber dem Vergussmaterial 38 umlaufend mit dem Phasendom 48 stoffschlüssig gefügt. Insbesondere werden die Hülse 54 und der Phasendom 48 hierbei miteinander ultraschallgeschweißt (Fig. 5). Hernach wird das Dichtelement 58 auf die Hülse 54 gesetzt (Fig. 6). Abschließend wird die Hülse 56 aufgesetzt (Fig. 7).

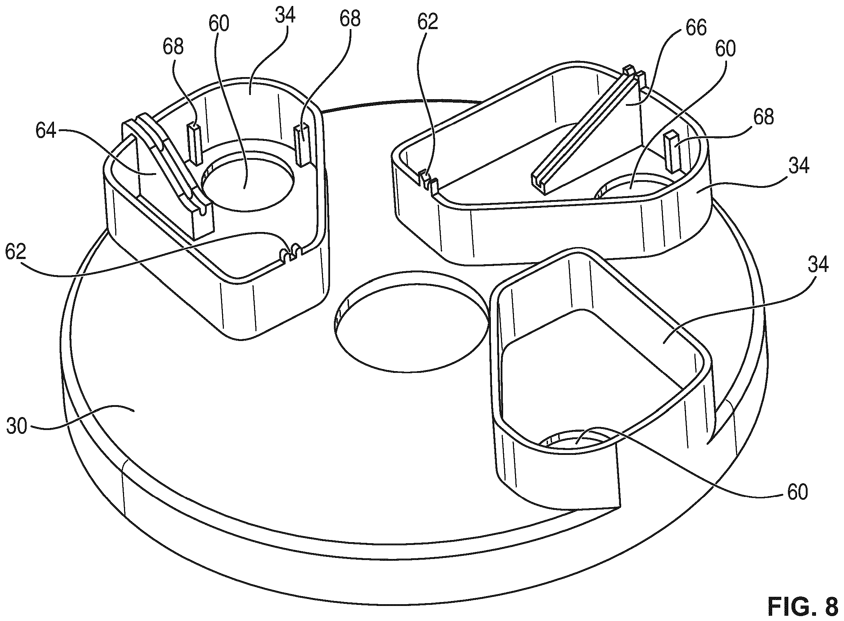

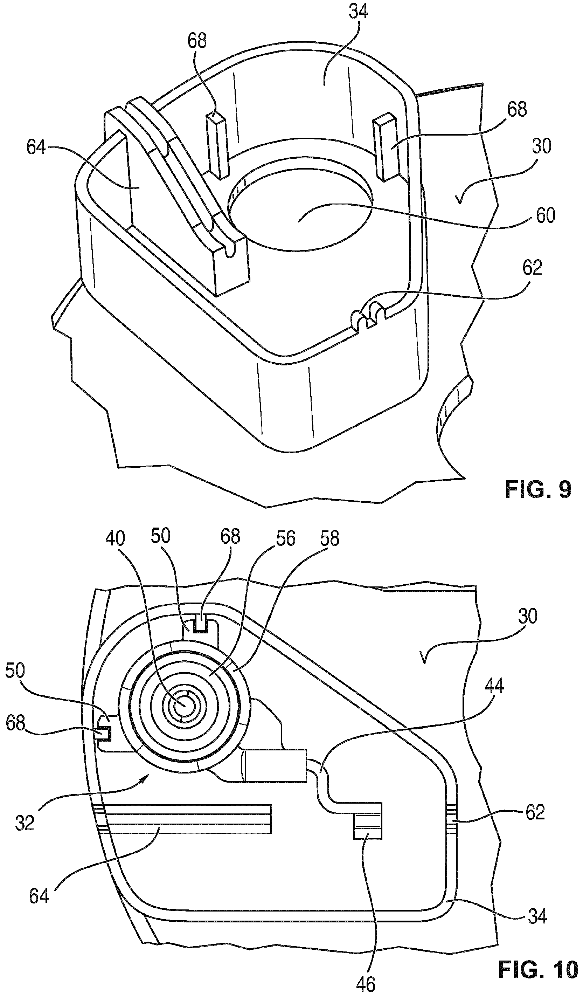

Nachfolgend ist der Aufbau des Kontaktadapters 30, insbesondere der Vergusstaschen 34, anhand der Fig. 8 und Fig. 9 näher erläutert. Die Fig. 8 zeigt hierbei beispielhaft eine Ausführungsform des Kontaktadapters 30 mit drei unterschiedlichen Vergusstaschen 34, die Vergusstaschen 34 können jedoch auch gleich ausgeführt sein.

Die Vergusstaschen 34 sind hierbei jeweils durch einen axial emporstehenden, umlaufend geschlossenen, Rand gebildet, welcher einstückig, also einteilig oder monolithisch, an die Stirnseite des Kontaktadapters 30 angeformt sind. Dadurch ist eine einfache und zweckmäßige Vergusstasche gebildet. Die Vergusstaschen 34 hierbei jeweils ein vorgegebenes Volumen zur Aufnahme des Vergussmaterials 38. Die beispielsweise topfförmigen Vergusstaschen 34 weisen somit den Rand als Seitenwand (Taschenwand) sowie einen durch die Stirnseite des Kontaktadapters 30 gebildeten (Taschen-)Boden auf. In dem Boden der Vergusstaschen 38 ist jeweils eine kreisrunde Vertiefung 60 als Aufnahme für den Phasenanschluss 32 beziehungsweise den Phasendom 48 eingebracht.

In der Fig. 8 weisen zwei der Vergusstaschen 34 einstückig angeformte Führungskonturen 62, 64, 66 zur Führung der Wicklungsabschnitte 36 in den Vergusstaschen 34 auf.

Die Vergusstaschen 34 weisen hierbei radial innenseitig jeweils eine Drahtführungsnut 62 als Führungskontur auf. Die Drahtführungsnut 62 weist eine etwa U- oder V-förmige Form auf, und ist axial emporstehend an einem oberen Rand der Umrandung der Vergusstasche 34 angeformt. Die Aussparung zwischen den Schenkeln der Drahtführungsnut 62 ist zur Aufnahme und Führung der Wicklungsabschnitte 36 ausgebildet.

Die Vergusstaschen 34 weisen weiterhin jeweils eine Führungskontur 64, 66 auf, welche als eine Drahtführungsrampe ausgebildet ist. Die Drahtführungsrampen 64, 66 sind als nutenartige Drahtführungen für die Wicklungsabschnitte 36 ausgeführt, welche sich rampenförmig von dem oberen Rand der Umrandung der Vergusstasche 34 zum Boden der Vergusstasche 34 erstrecken. Die Drahtführungsrampen 64, 66 weisen hierbei eine etwa radial orientierte Ausrichtung auf, wobei die Drahtführungsrampe 66 einen geraden Verlauf, und die Drahtführungsrampe 64 einen etwa S-förmig gebogenen Verlauf aufweist. Die Drahtführungsrampe 64 ist in der Darstellung der Fig. 9 näher gezeigt.

Wie insbesondere in der Draufsicht der Fig. 10 ersichtlich ist, sind die Drahtführungsrampen 64, 66 gegenüberliegend zu der jeweiligen Drahtführungsnut 62 an der Vergusstasche 34 angeformt. Mit anderen Worten sind die Führungskonturen 62, 64, 66 auf einer gemeinsamen Linie angeordnet, so dass die Wicklungsabschnitte 36 gerade, also biegungs- oder knickfrei, durch die Vergusstasche 34 führbar sind.

Die Vergusstaschen 34 weisen weiterhin zwei beabstandet zueinander angeordnete Positionierelemente 68 auf, welche im Bereich der Vertiefung 58 angeordnet sind. Die Positionierelemente 68 sind als axial verlaufende Fortsätze oder Stege an die Innenwandung der Vergusstaschen 34 angeformt. Die Positionierelemente 68 sind hierbei um die Vertiefung 60 herum angeordnet, und stehen der Innenwandung der Vergusstasche 34 in Richtung der Vertiefung 60 etwa radial empor.

Die Positionierelemente 68 dienen hierbei zur formschlüssigen Positionierung und Halterung des jeweiligen Phasenanschlusses 32. Wie insbesondere in der Fig. 10 ersichtlich ist, greifen die Positionierelemente 68 im Montage- oder Fügezustand in die komplementär geformten Gegenkonturen 50 des Phasendoms 48 ein, so dass der Phasendom 48 - und somit der Phasenanschluss 32 - verdrehsicher in der Vergusstasche 34 einsitzt. Vorzugsweise weise der Phasendom 48 hierbei einen etwa zylindrischen Fortsatz auf, welcher formschlüssig in der Vertiefung 60 einsitzt. Die Vertiefung 60 wirkt somit ebenfalls als ein Positionierelement zur Positionierung und Halterung des Phasenanschlusses 32.

Wie in der Fig. 10 ebenso ersichtlich ist, ist die Leiterbahn 44 derart gebogen, dass der Kontaktbereich 46 fluchtend auf einer Linie mit den Führungskonturen 64 62 angeordnet ist. Mit anderen Worten weist die Leiterbahn 44 einen tangential und/oder radial orientierten Versatz auf.

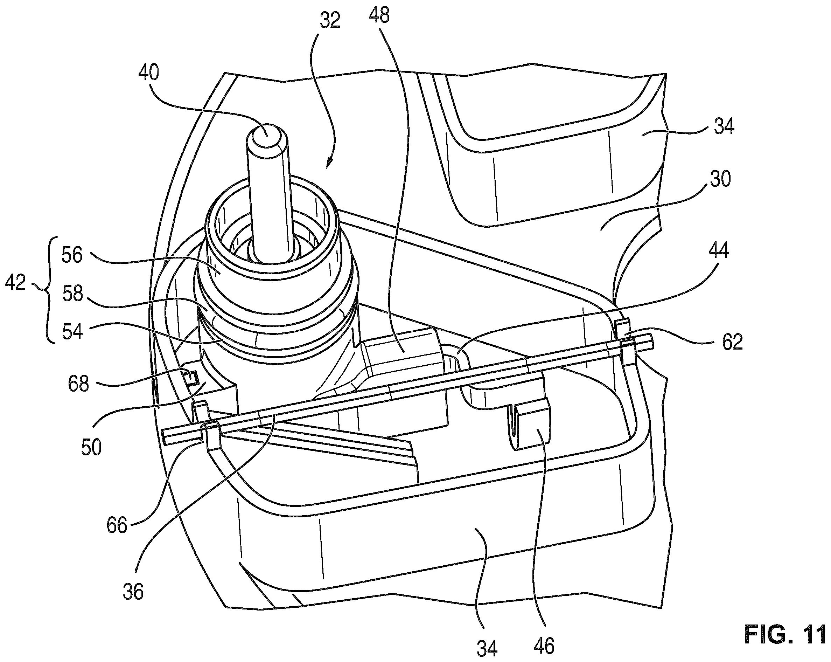

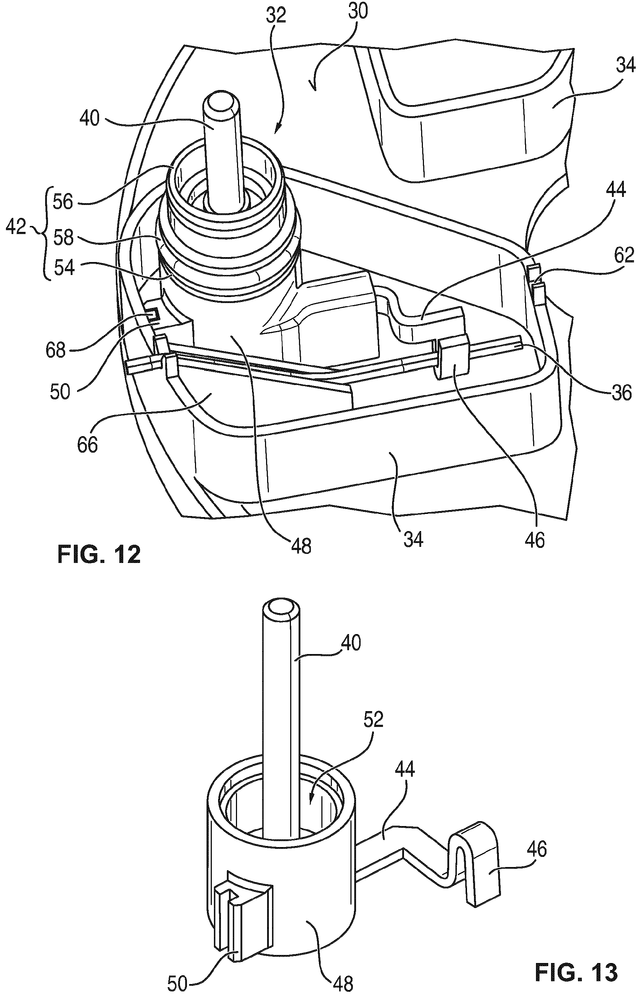

Zur Verschaltung der Statorwicklung 28 wird beispielsweise zunächst der Phasenanschluss 32 in der Vergusstasche 34 montiert. Anschließend werden die Drähte oder die Wicklungsabschnitte 36 der Statorwicklung von außen über die Vergusstaschen 34 auf den Kontaktadapter 30 gelegt (Fig. 11). Die Wicklungsabschnitte 36 verlaufen somit axial fluchtend zu den Führungskonturen 62, 64, 66 und den Kontaktbereich 46. Anschließend werden die Wicklungsabschnitte 36 wie in der Fig. 12 gezeigt axial in die Öffnung der Kontaktbereiche 46 eingeschoben oder gepresst. Hernach werden die vertikalen U-Schenkel des Kontaktbereichs 46 mit dem Wicklungsabschnitt 36 durch Schweißen elektrisch leitend kontaktiert. Abschließend wird die Vergusstasche 34 mit dem Vergussmaterial 38 gefüllt, und das Vergussmaterial 38 ausgehärtet.

In der Fig. 13 ist ein zweites Ausführungsbeispiel für den Phasenanschluss 32 dargestellt, wobei die Durchkontaktierung 42 nicht gezeigt ist. Das Ausführungsbeispiel der Fig. 13 unterscheidet sich im Wesentlichen durch die Ausgestaltung der Leiterbahn 44. In dieser Ausführung ist die U-Form des Kontaktbereichs 46 nach unten, also zum Boden der Vergusstasche 34 hin geöffnet. Hierbei wird zunächst der Wicklungsabschnitt 36 in der Vergusstasche 34 positioniert, und anschließend der Phasenanschluss 32 beziehungsweise der Kontaktbereich 46 von oben eingesetzt oder aufgesetzt.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Kältemittelantrieb
- 4: Antrieb
- 6: Scrollverdichter
- 8: Lagerschild
- 10: Antriebsgehäuse
- 10a: Motorgehäuse
- 10b: Elektronikgehäuse
- 12: Verdichtergehäuse
- 14: Flanschverbindung
- 16: Gehäusedeckel
- 18: Elektronik
- 20: Anschlussabschnitt
- 22: Einlass
- 24: Auslass
- 26: Stator
- 28: Statorpaket
- 30: Kontaktadapter
- 32: Phasenanschluss
- 34: Vergusstasche
- 36: Wicklungsabschnitt
- 38: Vergussmaterial
- 40: Phasenpin
- 42: Durchkontaktierung
- 44: Leiterbahn
- 46: Kontaktbereich
- 48: Phasendom
- 50: Gegenkontur
- 52: Aufnahme
- 54, 56: Hülse
- 58: Dichtelement
- 60: Vertiefung/Positionierelement
- 62: Führungskontur/Drahtführungsnut
- 64, 66: Führungskontur/Drahtführungsrampe
- 68: Positionierelement

- A: Axialrichtung

## Patentansprüche

1. Stator (26) für einen elektrischen Kältemittelantrieb (2), aufweisend
- ein Statorpaket (28), welches mit einer Statorwicklung bewickelt ist,
- mindestens einen Phasenanschluss (32), und
- einen auf das Statorpaket (28) aufgesetzten Kontaktadapter (30) zur Verschaltung der Statorwicklung mit dem Phasenanschluss (32),
- wobei der Phasenanschluss (32) einen Phasenpin (40) als Phasenanschlusskontakt und eine damit kontaktierte Leiterbahn (44) zur Kontaktierung an einen Wicklungsabschnitt (36), sowie einen Phasendom (48) als Gehäuse aufweist,
- wobei der Kontaktadapter (30) mindestens eine Vergusstasche (34) aufweist,
- wobei der Phasenanschluss (32) in die Vergusstasche (34) eingesetzt ist,
- wobei ein Wicklungsabschnitt (36) der Statorwicklung in die Vergusstasche (34) geführt und mit dem Phasenanschluss (32) kontaktiert ist,
und
- wobei die Vergusstasche (34) mit einem ausgehärteten Vergussmaterial (38) gefüllt ist.

2. Stator (26) nach Anspruch 1,
**dadurch gekennzeichnet,**
**dass** die Vergusstasche (34) durch einen emporstehenden, umlaufend geschlossenen, Rand gebildet ist, welcher einstückig an den Kontaktadapter (30) angeformt ist.

3. Stator (26) nach Anspruch 1 oder 2,
**dadurch gekennzeichnet,**
**dass** die Vergusstasche (34) eine angeformte Führungskontur (62, 64, 66) zur Führung des Wicklungsabschnitts (36) aufweist.

4. Stator (26) nach Anspruch 3,
**dadurch gekennzeichnet,**
**dass** die Vergusstasche (34) eine Drahtführungsnut (62) und/oder eine Drahtführungsrampe (64, 66) als Führungskontur aufweist.

5. Stator (26) nach einem der Ansprüche 1 bis 4,
**dadurch gekennzeichnet,**
**dass** die Vergusstasche (34) angeformte Positionierelemente (60, 68) zur Positionierung und Halterung des Phasenanschlusses (32) aufweist.

6. Stator (26) nach Anspruch 5,
**dadurch gekennzeichnet,**
**dass** der Phasendom (48) mit Gegenkonturen (50) für die Positionierelemente (60, 68) der Vergusstasche (34) ausgeführt ist.

7. Stator (26) nach einem der Ansprüche 1 bis 6,
**dadurch gekennzeichnet,**
**dass** die Leiterbahn (44) einen U-förmigen Kontaktbereich (46) zur Kontaktierung mit dem Wicklungsabschnitt (36) aufweist.

8. Stator (26) nach einem der Ansprüche 1 bis 7,
**dadurch gekennzeichnet,**
**dass** der Phasendom (48) als eine Umspritzung des Phasenpins (40) und der Leiterbahn (44) ausgeführt ist.

9. Elektrischer Kältemittelantrieb (2) für ein Kraftfahrzeug, aufweisend einen Stator (26) nach einem der Ansprüche 1 bis 8.

## Claims

1. Stator (26) for an electric refrigerant drive (2), comprising
- a stator core (28) which is wound with a stator winding,
- at least one phase connection (32) and
- a contact adapter (30), which is mounted on the stator core (28), for interconnecting the stator winding and the phase connection (32),
- wherein the phase connection (32) has a phase pin (40) as the phase connection contact and a conductor track (44), which is contact-connected to the phase pin, for contacting a winding portion (36), and a phase dome as housing,
- wherein the contact adapter (30) has at least one potting pocket (34),
- wherein the phase connection (32) is inserted into the potting pocket (34),
- wherein a winding portion (36) of the stator winding is guided into the potting pocket (34) and contact-connected to the phase connection (32), and
- wherein the potting pocket (34) is filled with a cured potting material (38).

2. Stator (26) according to Claim 1,
**characterized**
**in that** the potting pocket (34) is formed by a protruding, circumferentially closed edge which is integrally formed in one piece on the contact adapter (30).

3. Stator (26) according to Claim 1 or 2,
**characterized**
**in that** the potting pocket (34) has an integrally formed guide contour (62, 64, 66) for guiding the winding portion (36).

4. Stator (26) according to Claim 3,
**characterized**
**in that** the potting pocket (34) has a wire guiding groove (62) and/or a wire guiding ramp (64, 66) as a guide contour.

5. Stator (26) according to any of Claims 1 to 4, **characterized**
**in that** the potting pocket (34) has integrally formed positioning elements (60, 68) for positioning and holding the phase connection (32).

6. Stator (26) according to Claim 5,
**characterized**
**in that** the phase dome (48) is designed with mating contours (50) for the positioning elements (60, 68) of the potting pocket (34).

7. Stator (26) according to any of Claims 1 to 6,
**characterized**
**in that** the conductor track (44) has a U-shaped contact region (46) for contacting the winding portion (36).

8. Stator (26) according to any of Claims 1 to 7,
**characterized**
**in that** the phase dome (48) is designed as an overmoulding of the phase pin (40) and the conductor track (44).

9. Electric refrigerant drive (2) for a motor vehicle, comprising a stator (26) according to any of Claims 1 to 8.

## Revendications

1. Stator (26) pour un entraînement électrique à fluide frigorigène (2), comportant
- un paquet de tôles statoriques (28), qui est enroulé avec un enroulement statorique,
- au moins une borne de phase (32) et
- un adaptateur de contact (30) placé sur le paquet de tôles statoriques (28) pour raccorder l'enroulement statorique à la borne de phase (32),
- la borne de phase (32) comportant une broche de phase (40) comme contact de broche de phase et une piste conductrice (44) en contact avec celle-ci pour établir un contact avec une section d'enroulement (36), ainsi qu'un dôme de phase (48) formant un boîtier,
- l'adaptateur de contact (30) comportant au moins un compartiment de scellement (34),
- la borne de phase (32) étant insérée dans le compartiment de scellement (34),
- une section d'enroulement (36) de l'enroulement statorique étant guidée dans le compartiment de scellement (34) et étant mise en contact avec la borne de phase (32), et
- le compartiment de scellement (34) étant rempli d'un matériau de scellement (38) durci.

2. Stator (26) selon la revendication 1,
**caractérisé en ce**
**que** le compartiment de scellement (34) est formé par un bord saillant fermé en périphérie, qui est formé d'un seul tenant sur l'adaptateur de contact (30).

3. Stator (26) selon la revendication 1 ou 2,
**caractérisé en ce**
**que** le compartiment de scellement (34) comporte un contour de guidage (62, 64, 66) formé pour guider la section d'enroulement (36).

4. Stator (26) selon la revendication 3,
**caractérisé en ce**
**que** le compartiment de scellement (34) comporte une rainure de guidage de fil métallique (62) et/ou une rampe de guidage de fil métallique (64, 66) comme contour de guidage.

5. Stator (26) selon l'une des revendications 1 à 4,
**caractérisé en ce**
**que** le compartiment de scellement (34) comporte des éléments de positionnement (60, 68) formés pour positionner et maintenir la borne de phase (32).

6. Stator (26) selon la revendication 5,
**caractérisé en ce**
**que** le dôme de phase (48) est réalisé avec des contre-contours (50) pour les éléments de positionnement (60, 68) du compartiment de scellement (34).

7. Stator (26) selon l'une des revendications 1 à 6, **caractérisé en ce**
**que** la piste conductrice (44) comporte une zone de contact (46) en forme de U pour établir un contact avec la section d'enroulement (36).

8. Stator (26) selon l'une des revendications 1 à 7, **caractérisé en ce**
**que** le dôme de phase (48) est réalisé comme un surmoulage de la broche de phase (40) et de la piste conductrice (44) .

9. Entraînement électrique à fluide frigorigène (2) pour un véhicule à moteur, comportant un stator (26) selon l'une des revendications 1 à 8.
